# EUROPEAN PATENT SPECIFICATION

(11) **EP 0 661 823 B1**
(45) Date of publication and mention of the grant of the patent: **10.04.2002**
(21) Application number: 94309118.1
(22) Date of filing: 07.12.1994
(51) Int. Cl.: H04B 1/38, H04M 1/02

(54) **Portable radio communication apparatus**
Tragbares Funkkommunikationsgerät
Appareil portable de radiocommunication

(30) Priority: 28.12.1993 JP 33849393
(43) Date of publication of application: 05.07.1995
(73) Proprietor: NEC CORPORATION, Tokyo (JP)
(72) Inventor: Nagai, Michio, c/o NEC Corporation, Tokyo (JP)
(74) Representative: Moir, Michael Christopher

(56) References cited:
- EP-A- 0 414 365
- DE-A- 3 323 858
- GB-A- 2 275 587
- US-A- 5 485 517

## Description

### Background of the Invention

The present invention relates to a portable radio communication apparatus and, more particularly, to a portable radio communication apparatus with improved operability.

Conventional portable radio communication apparatuses include one having a casing which is rotatable at part thereof. Specifically, the casing is rotatable to a folded position to enhance portability or to an unfolded position to allow a communication to be held thereon, as needed. This kind of apparatus is disclosed in, for example, Japanese Patent Laid-Open Publication No. 60-21636. As shown in FIGS. 16 - 18 of the Laid-Open Publication, the apparatus has an upper casing 32 and a lower casing 31 which are rotatable toward and away from each other about an axis a. The upper and lower casings 32 and 31 each has a wedge-like configuration, as viewed in a sectional side elevation. In a folded position, the thicker ends of the wedge-shaped casings 32 and 31 each form a standing surface 34.

However, the conventional apparatus described above has some problems left unsolved, as follows. When the casing is folded by rotation, a transmitter portion or microphone and a receiver portion or speaker included in the casing entirely conceal each other, preventing a conversation from being held thereon. Further, keys provided on the casing are exposed to the outside at all times and apt to invite erroneous operation. In addition, since the transmitter portion is not oriented toward the user's mouth, conversation quality is likely to fall due to noise, among others.

EP 414365 discloses a portable telephone comprising a housing having a main body and an extending sleeve-like portion mounted for longitudinal slidable movement between a retracted position when not in use, and an extended position for use. The main body 2 comprises a speaker and operating keys and the sleeve-like portion includes a microphone. In the retracted position the sleeve-like portion partially overlaps the operating keys on the main body and the microphone remains exposed. The main body and the sleeve-like portion have the same overall dimensions.

DE 3323858 discloses a cordless telephone having a housing with several housing portions which can be moved, folded, pivoted or slided with respect to each other. Operating keys, a display and means for performing telecommunication are provided on surfaces which face each other when the telephone is in the closed configuration.

As used herein the term "speaker" includes any suitable transducer for producing an audio output from an electrical signal, and "microphone" means any suitable transducer for producing an electrical signal from an audio input.

### Summary of the Invention

It is therefore an object of the present invention to provide a portable radio communication apparatus which is easy to operate and allows a minimum of erroneous operation to occur.

Accordingly, in one aspect the present invention provides a portable communication apparatus comprising:
a first casing having a receiver portion; and
a second casing having a transmitter portion characterised in that
the second casing further comprises keys; and
in that said second casing is connected to said first casing by a pivot so that the first casing can turn in a plane substantially parallel to said first casing between an open position and a retracted position overlapping the second casing;
and in that said first casing has a smaller overall length than said second casing such that even when said first casing is retracted, at least one of said keys and said transmitter portion are exposed to the outside.

In another aspect the invention provides a portable communication apparatus comprising:
a first casing having a speaker portion;
a second casing having a microphone portion;
characterised in that said second casing includes a surface with operating keys; and in that
the first casing is connected to the second casing so as to be moveable generally parallel to the said surface between an open position and a closed position in which the first casing overlays the said surface, the first casing having a smaller overall length than the second casing such that at least one of the keys and the microphone portion remain exposed when the first casing overlays said surface.

The first casing may be pivotally connected to the second casing for rotation about an axis projecting from the said surface.

The apparatus of the present invention allows a conversation to be held thereon even when the casings thereof are folded or otherwise overlaid one on the other. This is because the first casing is sufficiently shorter than the second casing and prevents the receiver portion from covering the transmitter portion when the casing is folded. Even when the casing is folded, minimum necessary keys remain uncovered and can be operated, as desired. Hence, the user of the apparatus does not have to unfold the casing in the event of operating such keys. The transmitter portion is so configured as to face the user's mouth, thereby ensuring high communication quality. Furthermore, the power key is provided on the top of the first casing and is, therefore, brought to a position where it is not easy to operate when the casing is folded.

### Brief Description of the Drawings

The above and other objects, features and advantages of the present invention will become more apparent from the following detailed description taken with the accompanying drawings in which:
Fig. 1 is a front view showing a portable radio communication apparatus embodying the present invention in an unfolded position;
Fig. 2 is a view similar to Fig. 1, showing the embodiment in a folded position; and
Fig. 3 is a side elevation showing the embodiment in the unfolded position.

### Detailed Description of the Preferred Embodiment

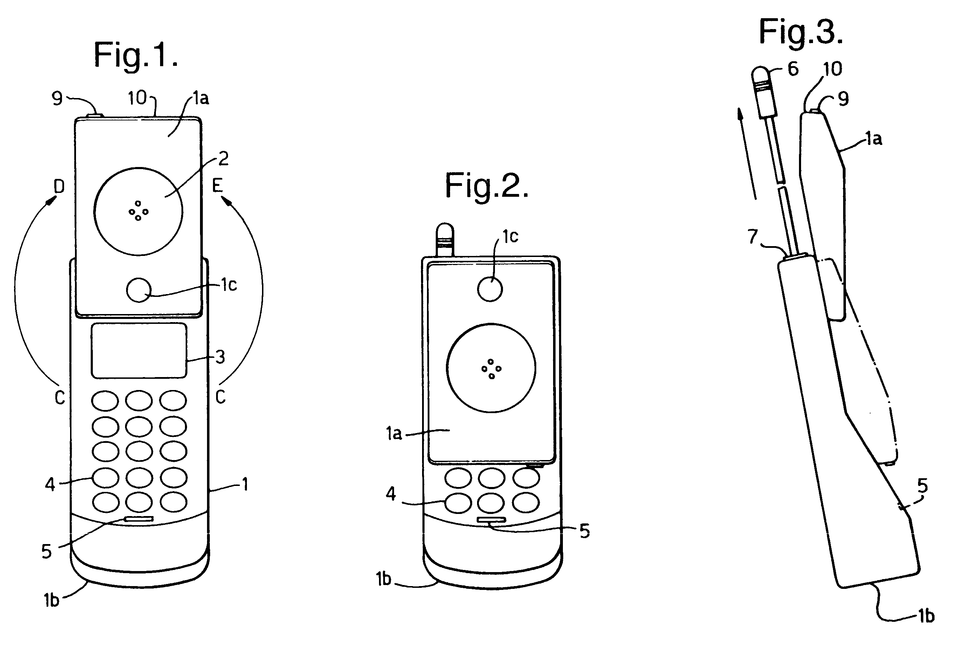

Referring to Figs. 1, 2 and 3, a portable radio communication apparatus embodying the present invention is shown and includes a casing 1. The casing 1 is made up of a first casing 1a having a receiver portion or speaker 2, and a second casing 1b having a display 3, keys 4, and a transmitter portion or a microphone 5. The first casing 1a is pivotably connected to an upper portion of the second casing 1b by a pivot shaft 1c. A retractable antenna 6 is mounted on the top 7 of the second casing 1b. The antenna 6 is extendable from and in the lengthwise direction of the casing 1b.

As shown in Fig. 1, the first casing 1a can turn about the pivot 1c in a direction C-D (or C-E), generally parallel to the front surface of the second casing 1b containing the keys 4 and display 3. After the first casing 1a has been brought to the position shown in Fig. 1, the antenna 6 is extended from the second casing 1b. In this condition, the apparatus is ready to communicate with a remote station. The first casing 1a is dimensioned sufficiently smaller than the second casing 1b, as measured in the lengthwise direction. Therefore, even when the apparatus is folded, so that the first casing 1a overlays the front surface of the casing 1b as shown in Fig. 2, the first casing 1a does not cover the transmitter 5 of the second casing 1b.

As best shown in Fig. 3, the lower portion of the second casing 1b is tapered such that the transmitter 5 faces the user's mouth. In addition, the first casing 1a is dimensioned small enough to leave minimum necessary ones of the keys 4 exposed to the outside when it is folded to the position of Fig. 2. The minimum necessary keys, for example, include a send key for making a call, and an end key for terminating a call. A power key 9 is not included in the keys 4, but it is provided on the top 10 of the first casing 1a, as viewed in Fig. 1. This prevents the user from operating the power key 9 by accident when the apparatus is folded, i.e., when the first casing 1a is held in the position of Fig. 1.

In summary, it will be seen that the present invention provides a foldable portable radio communication apparatus which allows a conversation to be held thereon even when a casing thereof is folded. This is because the casing has a first part which is sufficiently shorter than a second part and prevents a receiver portion from covering a transmitter portion when the casing is folded. Even when the casing is folded, minimum necessary keys remain uncovered and can be operated, as desired. Hence, the user of the apparatus does not have to unfold the casing in the event of operating such keys. The transmitter portion is so configured as to face the user's mouth, thereby ensuring high communication quality. Furthermore, a power key is provided on the top of the first casing and is, therefore, brought to a position where it is not easy to operate when the casing is folded.

## Claims

1. A portable communication apparatus comprising:
a first casing (1a) having a receiver portion (2); and
a second casing (1b) having a transmitter portion (5) **characterised in that**
the second casing (1b) further comprises keys (4); and
**in that** the second casing (1b) is connected to said first casing (1a) by a pivot (1c) so that the first casing (1a) can turn in a plane substantially parallel to said first casing (1a) between an open position and a retracted position overlapping the second casing (1b);
and **in that** said first casing (1a) has a smaller overall length than said second casing (1b) such that even when said first casing (1a) is retracted, at least one of said keys (4) and said transmitter portion (5) are exposed to the outside.

2. An apparatus as claimed in Claim 1, wherein said transmitter portion (5) protrudes from said second casing (1b).

3. An apparatus as claimed in Claim 1 or Claim 2, further comprising a power key (9) provided on a top of said first casing (1a).

4. An apparatus as claimed in any preceding claim, wherein a lower portion of said second casing (1b) is tapered such that said transmitter portion (5) faces a user's mouth.

5. An apparatus as claimed in any preceding claim, wherein said at least one key (4) is one of a send key and an end key.

6. A portable communication apparatus comprising
a first casing (1a) having a speaker portion (2);
a second casing (1b) having a microphone portion (5);
**characterised in that** said second casing (1b) includes a surface with operating keys (4); and **in that**
the first casing (1a) is connected to the second casing so as to be moveable generally parallel to the said surface between an open position and a closed position in which the first casing (1a) overlays the said surface, the first casing (1a) having a smaller overall length than the second casing (1b) such that at least one of the keys (4) and the microphone portion (5) remain exposed when the first casing (1a) overlays said surface.

7. An apparatus as claimed in Claim 6, wherein the first casing is pivotally connected to the second casing (1b) for rotation about an axis projecting from the said surface.

## Patentansprüche

1. Tragbare Kommunikationsvorrichtung, die aufweist:
ein erstes Gehäuse (1a) mit einem Empfängerteil (2); und
ein zweites Gehäuse (1b) mit einem Senderteil (5),
**dadurch gekennzeichnet, daß**
das zweite Gehäuse (1b) weiter Tasten (4) aufweist; und
daß das zweite Gehäuse (1b) mit dem ersten Gehäuse (1a) durch eine Schwenkeinrichtung (1c) verbunden ist, so daß das erste Gehäuse (1a) in einer Ebene im wesentlichen parallel zum ersten Gehäuse (1a) zwischen einer offenen Stellung und einer eingezogenen Stellung schwenkbar ist, in der es mit dem zweiten Gehäuse (1b) überlappt;
und daß das erste Gehäuse (1a) eine kleinere Gesamtlänge als das zweite Gehäuse (1b) hat, so daß sogar dann, wenn das erste Gehäuse (1a) eingezogen ist, wenigstens eine der Tasten (4) und der Senderteil (5) nach außen freiliegen.

2. Vorrichtung nach Anspruch 1, bei der der Senderteil (5) aus dem zweiten Gehäuse (1b) herausragt.

3. Vorrichtung nach Anspruch 1 oder 2, die weiter einen Stromschalter (9) aufweist, der auf der Oberseite des ersten Gehäuses (1a) vorgesehen ist.

4. Vorrichtung nach einem vorangehenden Anspruch, bei der ein unterer Teil des zweiten Gehäuses (1b) abgeschrägt ausgebildet ist, so daß der Senderteil (5) zum Mund des Benutzers gerichtet ist.

5. Vorrichtung nach einem vorangehenden Anspruch, bei der die wenigstens eine Taste (4) entweder eine Sendetaste oder eine Endetaste ist.

6. Tragbare Kommunikationseinrichtung, die aufweist,
ein erstes Gehäuse (1a) mit einem Lautsprecherteil (2);
ein zweites Gehäuse (1b) mit einem Mikrofonteil (5);
**dadurch gekennzeichnet, daß** das zweite Gehäuse (1b) eine Oberfläche mit Betätigungstasten (4) aufweist; und **daß**
das erste Gehäuse (1a) mit dem zweiten Gehäuse verbunden ist, so daß es allgemein parallel zur Oberfläche zwischen einer offenen Stellung und einer geschlossenen Stellung bewegbar ist, in der das erste Gehäuse (1a) die Oberfläche überlagert, wobei das erste Gehäuse (1a) eine kleinere Gesamtlänge als das zweite Gehäuse (1b) hat, so daß wenigstens eine der Tasten (4) und der Mikrofonteil (5) freiliegend bleiben, wenn das erste Gehäuse (1a) die Oberfläche überlagert.

7. Vorrichtung nach Anspruch 6, bei der das erste Gehäuse schwenkbar mit dem zweiten Gehäuse (1b) für Rotation um eine Achse verbunden ist, die von der Oberfläche vorsteht.

## Revendications

1. Appareil portable de radiocommunication comprenant :
un premier boîtier (1a) comportant une partie réception (2) ;
et un deuxième boîtier (1b) comportant une partie émission (5) ;
**caractérisé en ce que**
le deuxième boîtier (1b) comporte, en outre, des touches (4) ;
et **en ce que** le deuxième boîtier (1b) est relié au premier boîtier (1a) par un pivot (1c) de façon telle que le premier boîtier (1a) peut tourner dans un plan sensiblement parallèle audit premier boîtier (1a), entre une position d'ouverture et une position en retrait recouvrant le deuxième boîtier (1b) ;
et **en ce que** ledit premier boîtier (1a) a une plus faible longueur hors-tout que ledit deuxième boîtier (1b) de façon telle que lorsque ledit premier boîtier (1a) est dans la position en retrait, au moins une desdites touches (4) et ladite partie émission (5) sont exposées à l'extérieur.

2. Appareil selon la revendication 1, dans lequel ladite partie émission (5) fait saillie à partir du deuxième boîtier (1b).

3. Appareil selon la revendication 1 ou 2, comprenant, en outre, une touche (9) énergie installée au sommet dudit premier boîtier (1a).

4. Appareil selon l'une quelconque des revendications précécentes, dans lequel la partie inférieure dudit deuxième boîtier (1b) est effilée de façon telle que ladite partie émission (5) se trouve en face de la bouche d'un utilisateur.

5. Appareil selon l'une quelconque des revendications précédentes, dans lequel ladite touche (4) au moins unique est une des touches, soit la touche émission soit la touche fin.

6. Appareil portable de communication comprenant :
un premier boîtier (1a) comportant une partie haut-parleur (2) ;
un deuxième boîtier (1b) comportant une partie microphone (5) ;
**caractérisé en ce que** ledit deuxième boîtier (1b) comprend une surface comportant des touches fonctionnelles (4) ;
et **en ce que** le premier boîtier (1a) est relié au deuxième boîtier de manière à pouvoir se déplacer de façon globalement parallèle à ladite surface, entre une position d'ouverture et une position de fermeture, dans laquelle le premier boîtier (1a) recouvre ladite surface, le premier boîtier (1a) ayant une longueur hors-tout plus faible que le deuxième boîtier (1b) de façon telle qu'au moins une des touches (4) et la partie microphone (5) restent exposées, lorsque le premier boîtier (1a) recouvre ladite surface.

7. Appareil selon la revendication 6, dans lequel le premier boîtier est relié de façon pivotante au deuxième boîtier (1b) en vue de tourner sur un axe qui fait saillie à partie de ladite surface.
